(19) Europäisches Patentamt
European Patent Office
Office européen des brevets

(11) **EP 4 539 360 A1**

(12) **EUROPEAN PATENT APPLICATION**

(43) Date of publication:
**16.04.2025 Bulletin 2025/16**

(21) Application number: **23202499.2**

(22) Date of filing: **09.10.2023**

(51) International Patent Classification (IPC):
**H04B 10/116** (2013.01)

(52) Cooperative Patent Classification (CPC):
**H04B 10/116**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Rockwell Collins, Inc.**
**Cedar Rapids, IA 52498 (US)**

(72) Inventors:
• **GARCIA GENER, Alejandro**
  **Cork, T23 XN53 (IE)**
• **HARRIS, Philip**
  **Cork, T23 XN53 (IE)**

(74) Representative: **Dehns**
  **10 Old Bailey**
  **London EC4M 7NG (GB)**

(54) **LIGHT COMMUNICATION USING EVENT-BASED SENSORS AND NEUROMORPHIC PROCESSING**

(57)    Disclosed is a method of transmitting data by light communication in which a set of data values is encoded through a temporal variation of light emitted by one or more light emitters. This is then recorded using an event-based sensor and the sequence of events recorded using the event-based sensor is then processing using a spiking neural network to obtain information indicative of the underlying temporal variation of the light that was emitted by the one or more light emitters. The set of data values can thus be decoded accordingly.

Figure 3

## Description

The technology described herein generally relates to transmitting data by light communication (such as visible light communication (VLC)), and in particular to the use of event-based sensors and neuromorphic processing for decoding the light communication.

Background

It is often desired to be able to transmit information between systems. In this regard, visible light communication (VLC) is a relatively old technique that is increasingly being explored for use as a communication protocol for transmitting control (and any other desired) information between systems, and wherein a modulation of light is required in order to send data. That is, by suitably modulating one or more light sources, it is possible to encode data through an asynchronous temporal variation of the emitted light, and by detecting this asynchronous temporal variation in the emitted light it is then possible to decode the data that has been encoded into the emitted light pattern.

The present Applicants recognise however that there is scope for improved techniques for transmitting data using light communication in which there is an underlying asynchronous temporal variation. For example, as systems become increasingly autonomous it is also often desired to provide more robust and efficient perception capabilities, and light communication provides various possibilities in this regard.

Summary

According to a first embodiment, there is provided a method of transmitting data by light communication, the method comprising:

encoding a set of data values using one or more light emitters, wherein the set of data values is encoded through a temporal variation of light emitted by the one or more light emitters;
recording, using an event-based sensor, a sequence of events including a pattern of events reflecting the underlying temporal variation of the light that was emitted by the one or more light emitters; and
processing the recorded sequence of events using a spiking neural network to obtain information indicative of the underlying temporal variation of the light that was emitted by the one or more light emitters so that the set of data values that was encoded can be decoded from the underlying temporal variation of the light.

According to a second embodiment, there is provided a system comprising:

one or more light emitters configured to emit light in such a manner that a set of data values to be transmitted is encoded into a temporal variation of light emitted by the one or more light emitters; and
a decoder apparatus comprising:

an event-based sensor configured to record a sequence of events such that the sequence of events includes a pattern of events reflecting the temporal variation of the light that was emitted by the one or more light emitters; and
a processing unit configured to execute a spiking neural network, wherein the spiking neural network is configured to process the recorded sequence of events to obtain information indicative of the underlying temporal variation of the light that was emitted by the one or more light emitters so that the set of data values that was encoded can be decoded from the underlying temporal variation of the light.

According to the technology described herein, at least according to the first and second embodiments described above, a set of data values can therefore be (and is) encoded through a temporal variation in light that is emitted by one or more light emitters. For example, the set of data values can generally be encoded using any suitable and desired light communication protocol. For instance, this may be done using visible light (i.e. visible light communication (VLC)) but the technology described herein may also be used with a light emitter that can emit any type of light (i.e. any portion of the electromagnetic spectrum, such as infrared or ultraviolet), e.g. depending on the desired application, e.g. so long as a corresponding, suitable event-based sensor that can detect that type of light is provided.

An event-based sensor is then used to 'image' the one or more light emitters and record a sequence of events that includes a certain pattern of events reflecting the temporal variation of the light that was emitted by the one or more light emitters. The present Applicants recognise, however, that the recorded sequence of events will typically be noisy, e.g. due to background light interference, but also due to relative movement between the system that is carrying the event-based sensor and the one or more light emitters. That is, the recorded sequence of events will typically include not just the certain pattern of events reflecting the temporal variation of the light that was emitted by the one or more light emitters but also various other events, which may reflect essentially random background noise, but could also come from any other light emitters in the vicinity of the event-based sensor. Thus, the recorded sequence of events may generally need to be (and therefore is) processed to determine from the recorded sequence of events the pattern of events reflecting the temporal variation of the light that was emitted by the one or more light emitters (e.g. to isolate (filter) this from the background noise). According to the technology described herein this processing is performed using a spiking neural network.

The benefit of this is that the recorded data can then be processed very efficiently and with very low latency. For example, event-based sensors typically have ultra-low latency (e.g. due to their high framerates when compared to conventional camera systems) which can provide improved temporal precision. This therefore makes event-based sensors particularly well-suited to light communication techniques where it may be desired to encode data through a rapid variation in the light emissions characteristics (in particular to avoid the variation being too perceptible to humans).

In contrast, traditional cameras, while effective in capturing high-resolution images, often struggle to keep up with the rapid changes and high-speed movements in dynamic environments due to their relatively high latency (e.g. due to their low framerates).

However, due to the inherently asynchronous nature of event-based sensors, the use of conventional processing techniques in perception systems that make use of event-based sensors is often relatively inefficient, e.g. in terms of power usage and bandwidth, and may also mitigate the reduction in latency achieved through the use of the event-based sensor due to the additional processing time required. The Applicants, however, have realised that improvements may be achieved by making use of spiking processing, and in particular spiking neural networks, in conjunction with the event-based sensors within a light communication system, as spiking processing may offer improved processing performance in this situation due to its asynchronous nature.

For example, an event-based sensor (which may also be referred to as an "event camera", "neuromorphic camera", or "dynamic vision sensor") is designed to record a sequence of events, wherein each event in the sequence of events recorded by the event-based sensor is associated with a smaller regions of the event-based sensor (e.g. a pixel), and wherein the event-based sensor is operable and configured to generate a respective output for each of the plurality of smaller regions when there is a change in brightness in that region compared to the corresponding region within a previous event in the sequence of events. That is, an event-based sensor provides a stream of events, each event in the stream of events corresponding to a smaller region (e.g. pixel) of frames where the absolute change in brightness has changed so as to exceed a (predetermined) threshold between respective readings of the brightness at that smaller region. Thus, the stream of events essentially indicates the asynchronous brightness changes at each smaller region of the frame, and hence any asynchronous variation in light detected by the event-based sensor can effectively be encoded into the sequence of events that it provides.

Similarly, spiking neural networks are designed so that the neurons of the spiking neural network operate (fire) in an asynchronous manner. In particular, neurons within a spiking neural network do not transmit information at each propagation cycle (e.g. as conventionally occurs other forms of neural networks), but rather (only) transmit information when a membrane potential of that neuron (a (predetermined, e.g. trained) quality of the neuron related to its membrane electrical charge) reaches a (predetermined) membrane threshold. When the membrane potential reaches the threshold, the neuron fires, and generates a signal that travels to other neurons which, in turn, increase or decrease their potentials in response to this signal.

Thus, both the event-based sensor and the spiking neural network rely on, and are therefore capable of very efficiently processing, events that are inherently asynchronous in nature. Thus, the present Applicants recognise that there is a particular synergy is using spiking neural networks for processing (e.g. de-noising, fragmenting) frame sequences that have been obtained from an event-based sensor and in which there is an underlying asynchronous temporal variation in the data that is being observed. This is therefore particularly suited for light communication protocols (such as visible light communication (VLC) techniques) that are based on introducing asynchronous temporal variations in emitted light to encode and transmit data between two systems but wherein there may typically be large amounts of background noise.

This synergy also then means that the decoding side (decoder apparatus) can be implemented very efficiently, e.g. using appropriately designed neuromorphic processors that are configured to implement such spiking neural networks.

The effect and benefit of all this is therefore to provide a particularly powerful approach for implementing light communication in real-world situations even where there might be expected to be a significant level of background 'noise'. For instance, an example of this might be for communicating with an aircraft during an autonomous landing operation where an arrangement of runway lights may be controlled in order to communicate with the aircraft, e.g. to guide a safe aircraft landing. However, various other applications would be possible in this regard where light communication might beneficially be used.

The above arrangements may therefore provide various benefits compared to other possible approaches.

The one or more light emitters that are used to encode (transmit) the data may comprise any suitable and desired arrangement of light emitters. In embodiments there are plural light emitters and the variation that is used to encode the set of data values may involve both varying the outputs of individual light emitters but also controlling the overall arrangement of plural light emitters such that there is both a spatial and temporal variation. Various arrangements would be possible in this regard.

Likewise, any suitable event-based sensor may be used.

The spiking neural network may be implemented in any suitable and desired manner and by any suitable processing unit. In embodiments, the spiking neural network processing may be performed by a dedicated "neuromorphic" processing unit that is configured for executing a spiking neural network. This may be particularly efficient. However, it would also be possible to perform the spiking neural network processing using a generic (general-purpose) processing unit, or a graphics processor, for instance, and various arrangements are contemplated in this regard.

Furthermore, the spiking neural networks can be trained in any suitable or desired manner. For instance, the spiking neural networks can be trained in a supervised or unsupervised manner, as appropriate. Further, the training data used for training the spiking neural networks can also be any suitable or desired training data.

In particular embodiments, the training data for training a spiking neural network to obtain information indicative of an underlying temporal variation of in light emitted by the one or more light emitters can for example comprise a set of outputs from an event-based sensor recording a sequence of events including a pattern of events reflecting an underlying temporal variation of light emitted by one or more light emitters, where such light emitted by one or more light emitters encodes in its temporal variation a (known, labelled) set of data values. However, various other arrangements would be possible.

In embodiments, the spiking neural network is first trained in a supervised manner, e.g. in a manner similar to the above embodiment, and the spiking neural networks can be further configured and adapted during their runtime in an online manner, e.g. due to the nature of spiking neural networks, the trained spiking neural network can be validated at runtime for further fine tuning training.

As alluded above, in embodiments, the processing of the recorded sequence of events using the spiking neural network removes at least some background noise from the recorded sequence of events to isolate the pattern of events reflecting the underlying temporal variation of the light that was emitted by the one or more light emitters. Thus, in embodiments, the spiking neural network may be configured to do this. For example, the spiking neural network may be configured (e.g. by suitable training of the spiking neural network) to identify within a recorded sequence of events certain patterns that reflect one or more characteristics of the underlying temporal variation in the emitted light that was used for the encoding process. These characteristics may, for example, include an event frequency, e.g. a frequency at which events associated with a particular light emitter are recorded, which event frequency may be a carrier frequency and/or a modulating frequency associated with a respective light emitter that is being used for the light communication. However, there may be other suitable characteristics that reflect some property of the underlying temporal variation in the emitted light that was used for the encoding process and the spiking neural network may be configured to identify any such characteristics, as appropriate. For example, another suitable characteristic may be a rate at which a certain sub-sequence of events is repeated. That is, when encoding a message, there may be a certain repeat unit, wherein the same signal is transmitted multiple times. In that case, the spiking neural network may be configured to identify a periodicity or repeat pattern across a number of events (i.e. a rate at which a certain sub-sequence of events is repeated, e.g. due to a certain (predefined repetition in the) temporal variation of light emitted by at least one of the one or more light emitters). Other suitable characteristics may include for example an event brightness or other suitable value associated with the event that is indicative of a particular light emitter that was used for the encoding.

Thus, in general, the spiking neural network may be configured (e.g. by suitable training of the spiking neural network) to identify within a recorded sequence of events certain patterns in one or more, and typically all, of (i) event brightness; (ii) event frequency (i.e. the frequency with which events associated with a particular one or more of the light emitters are recorded), and (iii) periodicity across a number of events (i.e. a rate at which a certain sub-sequence of events is repeated, e.g. due to a certain (predefined repetition in the) temporal variation of light emitted by at least one of the one or more light emitters), which patterns thus reflect the underlying temporal variation in the emitted light that was used for the decoding. This then allows the pattern of events reflecting the underlying temporal variation of the light that was emitted by the one or more light emitters to be isolated from background events that may typically not exhibit such patterns of events, either because they show a more constant behaviour, or because they are single, random events with no meaningful underlying temporal variation.

In embodiments, the processing the recorded sequence of events using a spiking neural network to obtain information indicative of the underlying temporal variation of the light that was emitted by the one or more light emitters so that the set of data values that was encoded can be decoded from the underlying temporal variation of the light is followed by one or more further processing steps.

For example, in embodiments, the method further comprises performing fragmentation on the recorded sequence of events to identify, within the sequence of events, respective sets of events corresponding to a particular set of one or more light emitters, each respective set of events thus reflecting the underlying temporal variation for its respective set of one or more light emitters (and the decoding apparatus is configured to do this). This fragmentation can be performed in any suitable manner as desired. For example, this may use the same or another suitably trained spiking neural network.

In embodiments, this fragmentation may also serve to track events associated with the same light emitters between frames, e.g. in order to take into account relative movement between the event-based sensor and the one or more light emitters. For example, as described above, a spiking neural network may be configured (e.g. by suitable training of the spiking neural network) to identify within a recorded sequence of events certain patterns that reflect one or more characteristics of the underlying temporal variation in the emitted light that was used for the encoding process, and this can be used for such fragmentation (i.e. to associate certain recorded events with a particular (i.e. the same) light emitter even when the events are recorded at different positions (e.g. due to relative movement)). This could be done as part of the same processing described above, such that a single spiking neural network is configured to both isolate events and perform fragmentation, but in some embodiments these steps are performed separately, and sequentially, such that a first spiking neural network is used to isolate events that are reflective of the underlying temporal variation (e.g. from background noise) and a second spiking neural network is then used to perform fragmentation (i.e. to associate those events with a particular light emitter).

This then allows sets of events corresponding to a particular set of one or more light emitters within the sequence of events provided by the event-based sensor to be separated from each other into their own respective sets. For example, this may use the same or another suitably trained spiking neural network as any other processing described herein.

In embodiments, a separate decoding step is then performed. Thus, in embodiments, for each respective set of events corresponding to a particular set of one or more light emitters, the associated sequence of events recorded for that set of events is then decoded to obtain a (decoded) data value of the set of data values associated with that light emitter. This decoding can be performed in any suitable and desired manner, e.g. in the normal manner for light communication techniques. That is, once the data has been suitably processed in the manner of the technology described herein to obtain the information indicative of the underlying temporal variation of the light that was emitted by the one or more light emitters, any suitable decoding technique can then be used.

In some embodiments, each respective set of events corresponding to a particular set of one or more light emitters is processed by a separate spiking neural network. That is, in some embodiments, the fragmentation and decoding is performed in parallel for different light emitters. Various arrangements would however be possible in this regard.

The technology described herein also extends in embodiments to processing of data in this way itself. For example, this may be useful as part of the decoding operation in a light communication protocol (e.g. for visible light communication (VLC)) (and embodiments thus relate to such a decoding operation and decoding apparatus (decoder) using an event-based sensor in combination with spiking neural network processing).

Thus, in embodiments, there is provided a method of decoding a set of data values that has been encoded into a temporal variation of light emitted by one or more light emitters, the method comprising:

recording, using an event-based sensor, a sequence of events including a pattern of events reflecting the underlying temporal variation of light emitted by the one or more light emitters;
processing the recorded sequence of events using a spiking neural network to obtain information indicative of the underlying temporal variation of the light that was emitted by the one or more light emitters; and
decoding the set of data values encoded into the temporal variation of light emitted by the one or more light emitters from the obtained information indicative of the underlying temporal variation of the light.

There is also provided a decoding apparatus (decoder) for decoding a set of data values that has been encoded into a temporal variation of light emitted by one or more light emitters comprising, the decoding apparatus comprising:

an event-based sensor configured to record a sequence of events such that the sequence of events includes a pattern of events reflecting the temporal variation of the light that was emitted by the one or more light emitters; and
a processing unit configured to execute a spiking neural network, wherein the spiking neural network is configured to process the recorded sequence of events to obtain information indicative of the underlying temporal variation of the light that was emitted by the one or more light emitters so that the set of data values that was encoded can be decoded from the underlying temporal variation of the light.

In embodiments, the processing unit may be further configured to obtain the set of data values encoded from the obtained information indicative of the underlying temporal variation of the light. That is, in embodiments, there may be a separate decoding operation that is performed after the processing of the recorded sequence of events using the spiking neural network. As mentioned above, there may also be a separate fragmentation operation. Various arrangements would be possible in this regard.

The technology described herein may generally find application in various systems where light communication may suitably and desirably be used. Correspondingly, the set of data values that is transmitted may represent any suitable data (i.e. information) that is desired to be transmitted.

For instance, one example of where light communication may be used according to certain embodiments, as mentioned above, would be for autonomous vehicle control. Thus, in embodiments, the light communication is used to facilitate control of a vehicle when performing an automated manoeuvre. In that case, the decoder apparatus may be implemented within a suitable vehicle control unit.

A particular example of this would be for facilitating an autonomous landing manoeuvre for an aircraft. In that case, the set of one or more light emitters may be disposed on the ground, whereas the decoding apparatus including the event-based sensor and the processing unit that executes the spiking neural network may be mounted on-board the aircraft. The set of data values that are transmitted may thus be used to facilitate the control of the aircraft, for example when performing an automated landing manoeuvre. The use of light communication in this scenario may be particularly advantageous since it offers additional redundancy compared to existing air-to-ground communication channels.

Various other arrangements would however be possible and in general the technology described herein may find utility in various different applications.

The methods described herein may be implemented at least partially using software e.g. computer programs. It will thus be seen that when viewed from further aspects there is provided computer software specifically adapted to carry out the methods herein described (or at least certain steps thereof) when installed on a data processor, a computer program element comprising computer software code portions for performing the methods herein described when the program element is run on a data processor, and a computer program comprising code adapted to perform all the steps of a method or of the methods herein described when the program is run on a data processor (or data processing system). The data processor may be a microprocessor system, a programmable FPGA (field programmable gate array), neuromorphic processing unit (processor), etc..

The technology described herein also extends to a computer software carrier comprising such software which when used to operate a data processor to carry out at least some of the steps of the methods of the technology described herein. Such a computer software carrier could be a physical storage medium such as a ROM chip, RAM, flash memory, CD ROM or disk, or could be a signal such as an electronic signal over wires, an optical signal or a radio signal such as to a satellite or the like.

Embodiments may accordingly provide a computer program product for use with a computer system. Such an implementation may comprise a series of computer readable instructions fixed on a tangible medium, such as a non-transitory computer readable medium, for example, diskette, CD-ROM, ROM, RAM, flash memory or hard disk. It could, however, also comprise a series of computer readable instructions transmittable to a computer system, via a modem or other interface device, over either a tangible medium, including but not limited to optical or analogue communications lines, or intangibly using wireless techniques, including but not limited to microwave, infrared or other transmission techniques.

**Brief Description of Drawings**

A number of embodiments of the technology described herein will now be described by way of example only and with reference to the accompanying drawings, in which:

Figure 1 shows an example of a system in which the technology described herein may be used;

Figure 2 is a flow chart showing the operation of an event-based camera according to an embodiment of the technology described herein;

Figure 3 shows in more detail an embodiment of the technology described herein;

Figure 4 is a flow chart showing the operation of transmitting data according to an embodiment of the technology described herein; and

Figure 5 shows the structure of a spiking neural network according to an embodiment of the technology described herein.

**Detailed Description**

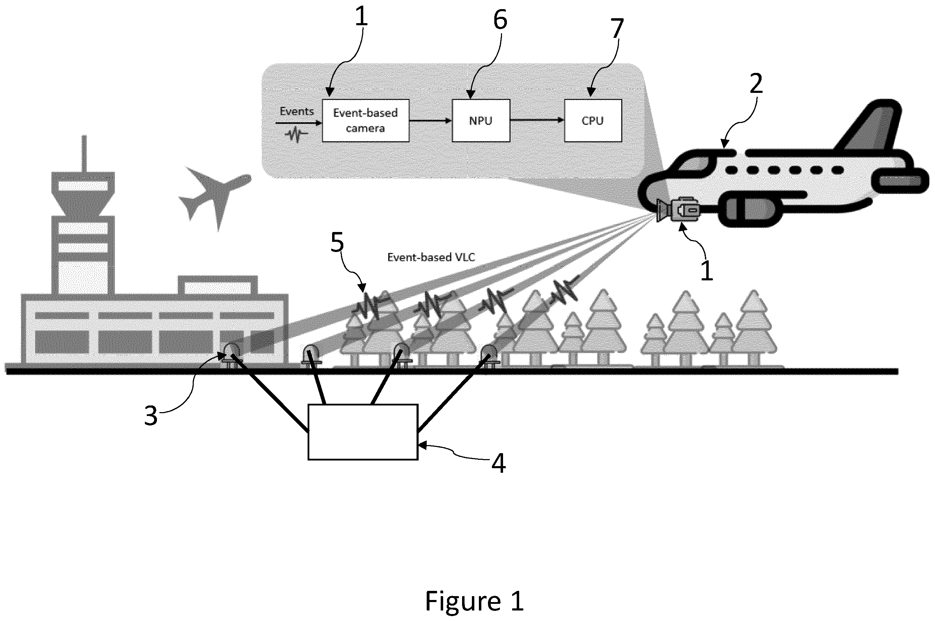

An example of the application of the light communication system described herein is shown in Figure 1. Figure 1 shows an event-based sensor 1, in this embodiment an event-based camera, an aircraft 2 that the event-based sensor is disposed on, a set of light emitters 3, and a controller 4. As shown, the controller 4 drives each of the light emitters in the series of light emitters in such a manner that the data that is to be transmitted from the ground to the aircraft is modulated (encoded) into the temporal variation of light emitted 5 from the light emitters 3 (i.e. a set of data values to be transmitted is encoded through the temporal variation of light emitted by the one or more light emitters). This is done by essentially modulating the light emitted from the light emitters 3 to encode the desired data to be transmitted into the light variation itself. This can be done in any suitable manner, such as using On-Off keying, phase shift keying, QAM, OFDM, including any other single-carrier/multi-carrier modulated transmission and pulse-based transmission techniques as appropriate and desired.

Further, for redundancy the same data can be encoded into a plurality of light emitters 3, as desired, which may be particularly advantageous for safety-critical applications, e.g. such as communicating information to an aircraft.

Additionally, in this embodiment, the controller 4 is configured to drive the light emitters 3 with a high enough frequency (i.e. in a rapid manner) so that the light emitters look like they are not having any temporal variation in their emission of light to any humans. This is so as to reduce the distraction that the light emitters 3 would have on any person in visual range, e.g. the pilots of the aircraft or any ground-crew.

Various arrangements would however be possible in this regard.

In the embodiment of Figure 1, the event-based camera 1 is directed toward the light emitters 3 so that the event-based camera 1 receives the light transmitted by those light emitters 3 over time (i.e. the event-based camera 1 receives light from a scene that contains the light emitters 3). By doing so, the event-based 1 camera produces, asynchronously, events for each of its pixels which are indicative of a change in brightness at that pixel, as is known.

The event-based camera 1 is, accordingly, able to provide an output (e.g. a stream (sequence) of events (that can in some embodiments be used to construct a frame)) that is indicative of the temporal variation of light received at each pixel of event-based camera 1.

That is to say, the output of the event-based camera comprises a stream (sequence) of (digital) events, each event in the stream of events comprising information indicative of: the pixel of the event-based camera at which the event was detected (e.g. in the form of (horizontal and vertical (Cartesian)) pixel coordinates (x, y)); the time at which the event was detected; and the value of that event.

Hence, the event-based sensor records a sequence of events including a pattern of events reflecting the underlying temporal variation of the light that was emitted by the one or more light emitters.

The stream of events could, if desired, be used to construct an image (frame) with pixels that asynchronously update based on a brightness change (assessed against a threshold brightness change), so that the temporal variation of light received at the event-based camera 1 (which can include the temporal variation of light at any light emitters in the scene that the event-based camera is configured to picture, as well as any background sources of temporal variations of light) is effectively encoded into the asynchronous change of pixels within the images (frames) that the event-based camera provides over time.

However, in embodiments, the sequence of events itself is processed, i.e. without constructing an image, to determine the underlying temporal variation of the light that was emitted by the one or more light emitters.

As the output of the event-based camera 1 (e.g. the sequence of (asynchronous) events) encodes the temporal variation of light that the event-based camera 1 images (records), any information in that temporal variation of light can be effectively decoded (demodulated) by determining the pattern of events reflecting the temporal variation of the light that was emitted by the one or more light emitters.

In this embodiment, the output of the event-based camera is provided to a (neuromorphic) processing unit 6, comprising at least one spiking processor, in particular wherein the processing unit 6 is configured to execute a spiking neural network, to decode the determined pattern of events reflecting the temporal variation of the light that was emitted by the one or more light emitters to obtain the set of data values that were encoded.

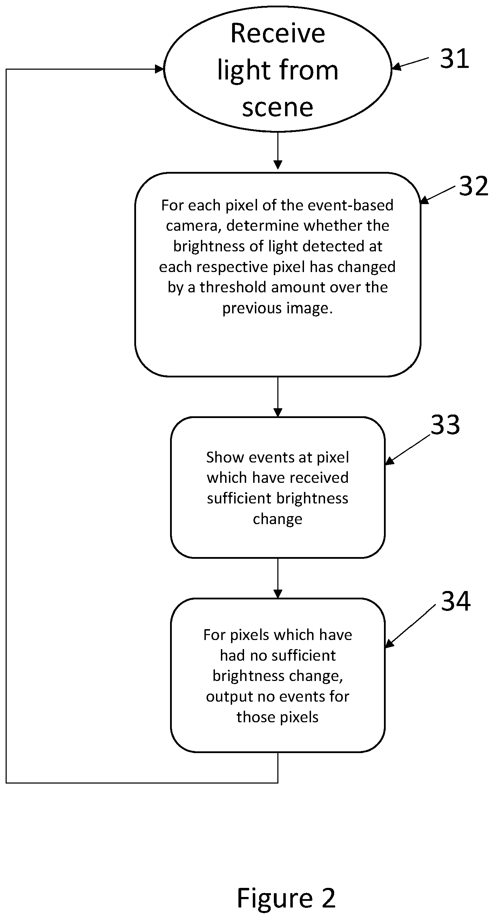

Figure 2 shows the process of providing a sequence of events by an event-based camera.

The event-based camera first receives light from a scene at a pixel (step 31). The event-based camera subsequently determines, for that pixel, whether the brightness (i.e. the intensity of light) detected at the pixel has changed (e.g. increased or decreased) from the brightness of light received at that pixel at the previous time-step at which the event-based camera recorded the brightness of light at that pixel by a (predetermined) threshold amount (step 32).

For instance, the change in brightness of light received at a pixel between the time-steps at which the event-based camera records the brightness of light may be determined using the change in logarithmic intensity of light detected at a pixel between time steps at which the brightness of light was measured e.g. when

$$\left| \log\big(I(x, t)\big) - log(x, t - \Delta t) \right| \geq y$$

Where $I(x, t)$ is the intensity of light received at a pixel $x$ at time $t$, and $y$ is the (predetermined) threshold, and $\Delta t$ is the time between measurements of the intensity of light ($\Delta t$ is typically a function of a refresh rate of the event-based camera, is in the order of e.g. microseconds, and is the time-step between measurements of the brightness of light received at the pixels of the event-based camera).

For pixels where the absolute change is brightness between time steps has changed by a threshold an event is output for that pixel (step 33).

For instance, when the brightness change at a pixel has increased over a (predetermined) threshold, the event-based camera outputs an event comprising the coordinates of that pixel (e.g. in Cartesian coordinates (x, y)), the time at which the event was detected, and a (positive, e.g. 1) value that indicates that the brightness change has increased over the (predetermined) threshold.

Similarly, when the brightness change at a pixel has decreased below a (predetermined) threshold, the event-based camera outputs an event comprising the coordinates of that pixel (e.g. in Cartesian coordinates (x, y)), the time at which the event was detected and a (negative, e.g. -1) value that indicates that the brightness change has decreased below the (predetermined) threshold.

When the brightness change at a pixel does not fall below or above the threshold value, no event is recorded (output) for that pixel.

The process subsequently returns to receive light from the scene (step 31).

The event-based camera thus, in one time-step, can output zero or more events, depending on the temporal variation of light that the event-based camera records, and thus over time can output a sequence of events based on the temporal variation of light recorded (received) by the event-based camera.

Hence, the event-based camera can effectively track the temporal evolution of light that it receives through the sequence of events that it provides as each event is indicative of a change in brightness of received light at a pixel of the event based-camera, and hence the temporal evolution of light received by the event-camera, thus effectively allowing that temporal evolution to be encoded within the sequence of events provided by the event-based camera.

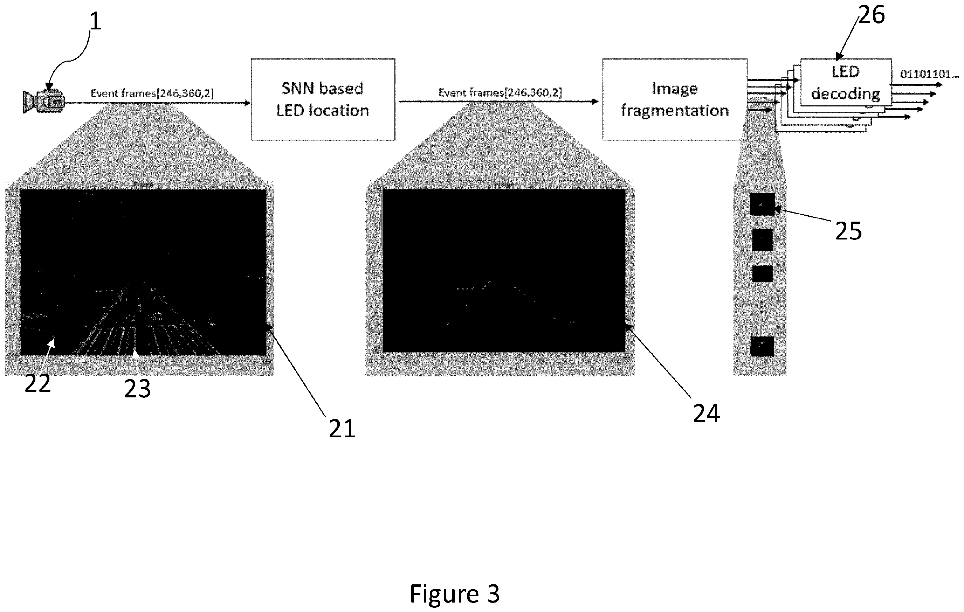

Figure 3 illustrates the combination of various algorithms implemented by the processor for decoding (demodulation) the data encoded into the variation of light at the one or more light emitters from a sequence of events provided by an event-based sensor according to this embodiment.

An event-based camera 1, according to this embodiment, outputs a sequence of events including a pattern of events reflecting the underlying temporal variation of the light that was emitted by the one or more light emitters, each event being indicative of a sufficient change in the brightness of light received at the pixel associated with that event.

In Figure 3, frame 21 shows an image (frame) constructed using the sequence of events provided by the event-based camera 1.

Frame 21 can be constructed for example using post-processing techniques on the sequence of events provided by the event-based camera. For instance, pixels of the image can correspond, and in this embodiment do correspond, to the pixels of the event-based camera and the events of the event-based camera can be used to asynchronously update the pixels of the frame 21.

For instance, events with a positive value can be used to update their associated pixels with a positive (white) output, and events with a negative value can be used to update their respective pixels with a negative (black) output. This can occur as and when events from the sequence of events provided by the event-based camera are received allowing for the asynchronous updating of the pixels.

Frame 21 thus comprises non-zero outputs 22 for some pixels, e.g. those pixels associated with events having a positive value, and also comprises no output for pixels associated with events having a negative value.

Frame 21 thus presents an illustration of the sequence of events provided by the event-based sensor 1. However, it will be appreciated that it is not necessary to construct frame 21, and that the sequence of events can itself be processed by the neuromorphic processor.

As can be seen from frame 21, there is background noise present within the frame 21, e.g. the runway markings 23 are shown as non-zero outputs in the frame 21 due to the movement of the aircraft and the natural reflections of light causing events to be produced within the event-based sensor.

Thus, the sequence of events provided by the event-based sensor also comprises "noisy" events, e.g. events that do not arise from the temporal variation of light emitted by the one or more light emitters that have data encoded into their temporal variation of light that the event-based sensor records, but rather due to the background variation in brightness of light received at the pixels of the event-based sensor (e.g. due to other light sources and the movement of the aircraft).

A spiking neural network hence (first) operates to filter the events in the sequence of events that arise due to the temporal variation of light emitted at the one or more light emitters in the scene that the event-based camera records from any "noisy" events .

For instance, as the light emitters are controlled to emit light with specific frequencies, and as these specific frequencies are effectively encoded into the evolution of events provided by the event-based camera, and spiking neurons exhibit time dependency, the temporal evolution of these light emitter events can be effectively detected and tracked with a spiking neural network, allowing for the "noisy" events to be substantially removed from the sequence of events.

Filtered frame 24 shows an example of a frame constructed in a similar manner to frame 21 but using the filtered sequence of events provided by the spiking neural network. As shown in filtered frame 24, the "noisy" events, e.g. those events arising due to the runway markings, are effectively removed from the sequence of events, and the events that remain are (only) those that arise due to some variation of light at light emitters on the sides of the runway.

(Image) Fragmentation can then be, and in this embodiment is, performed on the filtered sequence of events to provide a set of fragments, each fragment comprising a sequence of events associated with the temporal variation of light at a particular set of the one or more light emitters.

A fragmentation spiking neural network be used to perform the fragmentation. For instance, the various ones of the light emitters can be configured to emit light at various frequencies. Thus, as these various frequencies are effectively encoded into the evolution of events provided in the filtered sequence of events, and as spiking neurons exhibit time dependency, the temporal evolution of these light emitter events can be effectively detected and tracked with a spiking neural network, allowing for the events arising from various different light emitters to be separated out from the filtered sequence of events into their own respective fragments (e.g. a sequence of events for each respective light emitter). The spiking neural network may also account for the temporal variation in the position of the events which can arise due to the relative motion between the aircraft and the one or more light emitters meaning that the events associated with a set of the one or more light emitters will have a temporal variation in their position as the event-based sensor moves relative to them.

As such, even when the aircraft is moving, the spiking neural network can identify which events relate to which particular sets of light emitters so that the sequence of events can be appropriately fragmented.

The spiking neural network can be configured in this manner by appropriate training, and/or the sequence of events can be processed, by a spiking neural network or otherwise, to modify the position associated with the events in the sequence of events so that the relative motion between the aircraft and the light emitters is accounted for in the sequence of events (as this relative motion is generally known by the aircraft controller); for instance, given that the velocity of the aircraft is generally known and that the light emitters are generally stationary, the processor (and/or spiking neural network) can be configured to determine using the velocity/displacement of the aircraft (vehicle) which events are related to a particular set of the one or more light emitters using the time between events and the displacement of the aircraft (vehicle) (as determined using the aircraft (vehicle) velocity or otherwise) during the time between those events. Hence, the position of the events can be modified to be in a fixed-reference frame as opposed to the relative reference frame of the event-based camera that is in motion, or otherwise, as appropriate.

Various arrangements would be possible in this regard.

Alternatively, or additionally, conventional data processing techniques can be used to fragment the sequence of events based on the temporal variation in the position of the events, or using conventional image fragmentation on images constructed using the (filtered) sequence of events provided by the event-based camera.

Image fragmentation and/or segregation can be performed by the same or different processing unit.

Fragments 25 shown in Figure 2 are the result of such fragmentation, and each fragment 25 is indicative of the variation of light at a particular set of light emitters. Each of the fragments 25 are associated with a sequence of events that arose from the one or more light emitter that they are associated with.

Filtered frame 24, and thus the filtered sequence of events, can be fragmented such that each individual light emitter is separated from the others, or where light emitters are close together in such a manner where there is a plurality of light emitters per fragment 25.

The concurrent extraction of information from each distinct light emitter is enabled by image fragmentation, and in this embodiment, each fragment 25 is directed towards separate decoding modules 26, that may comprise further spiking neural networks and/or conventional processing techniques, to decode the information encoded into the temporal evolution of the pixels of the fragments 25 and thus the information encoded into the temporal variation of light at the light emitters, hence allowing for data to be transmitted from those light emitters to the aircraft.

For instance, events with positive values are associated with an increase in brightness and so can be indicative of a high binary output. Similarly, events with negative values are associated with a decrease in brightness and so can be associated with a low binary output, and no events indicate no change in brightness and can thus be associated with the binary output of the previous event. These binary outputs can effectively be decoded to obtain the data encoded into the temporal variation of light at the light emitter. Any suitable combination would be possible in this regard.

Various arrangements would however be possible in this regard.

This parallel approach of directing each fragment to separate decoding modules 26 facilitates the application of diverse redundancy techniques, allowing the light emitters to transmit the same data through multiple channels.

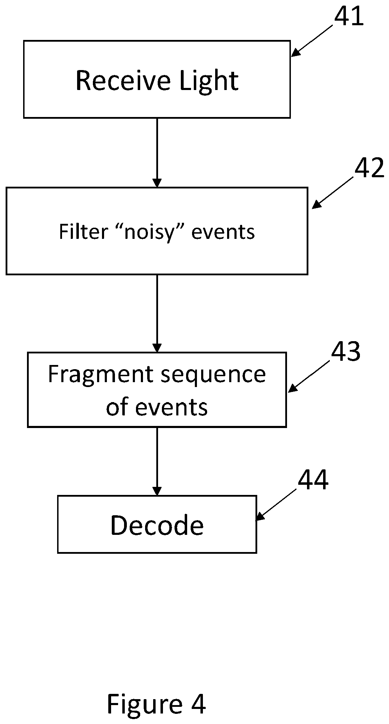

Figure 4 shows an example flowchart that can be implemented to perform the demodulation process as described herein.

An event-based sensor first records a scene which contains light emitters that have data encoded into their temporal variation of light to provide a sequence of events including a pattern of events reflecting the temporal variation of the light that was emitted by the one or more light emitters (step 41), as determined e.g. using the process of Figure 2.

The process proceeds to filter the sequence of events provided by the event-based camera (step 42). For example, "noisy" events that arise from light sources other than those light sources which emit with a specific frequency can be effectively filtered out of the sequence of event by a suitable spiking neural network to provide a filtered sequence of events.

The filtering results in a sequence of filtered events that contains (substantially only) the events that encode information indicative of the temporal variation of light the light emitters detected by the event-based sensor. That is to say, the filtered sequence of may, at this point, be substantially devoid of any "noisy" events.

The filtered sequence of events is then subjected to fragmentation, where a set of fragments are provided, each fragment associated with a sequence of events that arise from the temporal variation of light at a particular set of light emitters in the scene (step 43).

The data encoded into the temporal variation of light at each fragment is then decoded from the fragment's respective filtered sequence of events (step 44).

This can be done effectively using further spiking neural networks and/or conventional processing techniques, and each fragmented signal may be effectively demodulated in parallel.

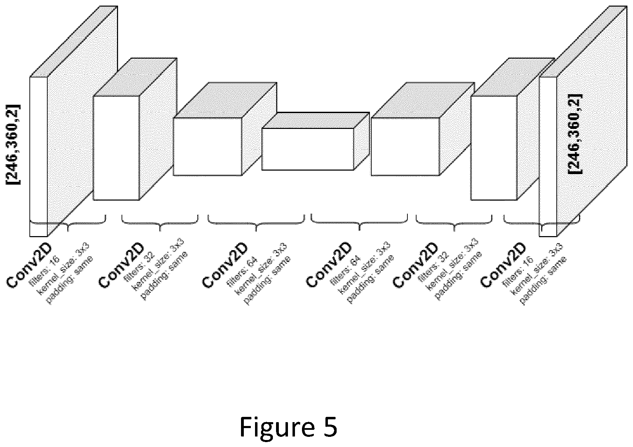

Figure 5 shows an example structure of a spiking neural network suitable for filtering out the "noisy" events from the sequence of events provided by the event-based camera. The spiking neural network of Figure 5 contains six convolutional layers with the shape of an autoencoder that tracks the different movements between an object and the background.

Similar spiking neural networks can be implemented for the other, i.e. fragmenting and decoding, processes of the technology described herein.

The neurons of the spiking neural networks are, in this embodiment, modelled as Leaky integrate and fire neurons where the neurons are modelled using equations 1 to 3:

$$y_t = (1 - \alpha)y_{t-1} + x_t \qquad \text{Equation 1}$$

$$s_t = y_t \text{ when } y_t \geq \theta \qquad \text{Equation 2}$$

$$y_t = 0 \qquad \text{Equation 3}$$

Where equation 1 models the state dynamics, equation 2 models the spike dynamics, equations 3 models the reset dynamics; and wherein x is the input to the neuron, y is the output of the neuron, $\alpha$ is the decay of the neuron, $\theta$ is the threshold of the neuron, and t is the given time.

However other neuron models that leverage different mechanisms and properties could also be used to achieve a spiking neural network.

These neurons, that act as the building blocks of SNNs, receive spikes from input synapses and fire when a specific threshold is exceeded ($\theta$).

The dynamic behaviour of these neurons allows the spiking neural network to naturally encode the temporal dependency of input events that would be otherwise lost without the use of external recurrence mechanisms. Moreover, they maintain inactive if no input spikes are produced, which reduces power consumption when processing.

As such, the particular combination of event-based cameras and spiking neural networks configured to process the sequence of events provided by the event-based camera may be particularly efficient, for example due to the asynchronous nature of both the event-based camera and the neurons of the spiking neural network.

It can be seen from the above description that the technology described herein, in its embodiments at least, provides an efficient way for communicating and decoding data encoded into the temporal variation of light at one or more light emitters. Furthermore, this can be done with relatively efficient technologies, such as event-based sensors and spiking neural networks, which provides a particularly low-latency and power efficient light communications system. The technology described herein thus provides various benefits compared to other approaches.

The foregoing detailed description has been presented for the purposes of illustration and description. It is not intended to be exhaustive or to limit the technology described herein to the precise form disclosed. Many modifications and variations are possible in the light of the above teaching. The described embodiments were chosen in order to best explain the principles of the technology described herein and its practical applications, to thereby enable others skilled in the art to best utilise the technology described herein, in various embodiments and with various modifications as are suited to the particular use contemplated. It is intended that the scope be defined by the claims appended hereto.

**Claims**

1. A method of transmitting data by light communication, the method comprising:

   encoding a set of data values using one or more light emitters, wherein the set of data values is encoded through a temporal variation of light emitted by the one or more light emitters;
   recording, using an event-based sensor, a sequence of events including a pattern of events reflecting the underlying temporal variation of the light that was emitted by the one or more light emitters; and
   processing the recorded sequence of events using a spiking neural network to obtain information indicative of the underlying temporal variation of the light that was emitted by the one or more light emitters so that the set of data values that was encoded can be decoded from the underlying temporal variation of the light.

2. A method of decoding a set of data values encoded into a temporal variation of light emitted by one or more light emitters, the method comprising:

   recording, using an event-based sensor, a sequence of events including a pattern of events reflecting the underlying temporal variation of light emitted by the one or more light emitters;
   processing the recorded sequence of events using a spiking neural network to obtain information indicative of the underlying temporal variation of the light that was emitted by the one or more light emitters; and
   decoding the set of data values encoded into the temporal variation of light emitted by the one or more light emitters from the obtained information indicative of the underlying temporal variation of the light.

3. The method of claim 1 or 2, wherein the processing of the recorded sequence of events using the spiking neural network removes at least some background noise from the recorded sequence of events to isolate the pattern of events reflecting the underlying temporal variation of the light that was emitted by the one or more light emitters.

4. The method of claim 3, wherein the spiking neural network is configured to identify within a recorded sequence of events certain patterns in one or more of (i) event brightness, (ii) event frequency, (iii) periodicity across a number of events, which patterns thus reflect the underlying temporal variation in the emitted light that was used for the decoding.

5. The method of any preceding claim, further comprising performing fragmentation on the recorded sequence of events to identify, within the sequence of events, respective sets of events corresponding to a particular set of one or more light emitters, each respective set of events thus reflecting the underlying temporal variation for its respective set of one or more light emitters.

6. The method of claim 5, further comprising, for each respective set of events corresponding to a particular set of one or more light emitters, decoding the associated sequence of events recorded for that set of events to decode a data value of the set of data values associated with that light emitter.

7. The method of claim 6, wherein each respective set of events corresponding to a particular set of one or more light emitters is processed by a separate spiking neural network.

8. The method of any preceding claim, wherein the light communication is used to facilitate control of a vehicle when performing an automated manoeuvre, such as facilitating an autonomous landing manoeuvre for an aircraft.

9. A system for transmitting data, comprising:

one or more light emitters configured to emit light in such a manner that a set of data values to be transmitted is encoded into a temporal variation of light emitted by the one or more light emitters; and
a decoder apparatus comprising:

an event-based sensor configured to record a sequence of events such that the sequence of events includes a pattern of events reflecting the temporal variation of the light that was emitted by the one or more light emitters; and
a processing unit configured to execute a spiking neural network,

wherein the spiking neural network is configured to obtain information indicative of the underlying temporal variation of the light that was emitted by the one or more light emitters so that the set of data values that was encoded can be decoded from the obtained information indicative of the underlying temporal variation of the light.

10. A system for decoding a set of data values encoded into a temporal variation of light emitted by one or more light emitters comprising:

an event-based sensor configured to record a sequence of events such that the sequence of events includes a pattern of events reflecting the temporal variation of the light that was emitted by the one or more light emitters; and
a processing unit configured to execute a spiking neural network, wherein the spiking neural network is configured to obtain information indicative of the underlying temporal variation of the light that was emitted by the one or more light emitters, and
wherein the processing unit is further configured to obtain the set of data values encoded from the obtained information indicative of the underlying temporal variation of the light.

11. The system of claim 9 or 10, wherein the spiking neural network is configured to remove at least some background noise from the recorded sequence of events to isolate the pattern of events reflecting the underlying temporal variation of the light that was emitted by the one or more light emitters.

12. The system of any one of claims 9 to 11 method of any preceding claim, wherein the processor is further configured to perform fragmentation on one or more event frames including the recorded sequence of events to identify, within the sequence of events , respective sets of events corresponding to a particular set of one or more light emitters, each respective set of events thus reflecting the underlying temporal variation for its respective set of one or more light emitters.

13. The system of claim 12, wherein the processor is further configured, for each respective set of events corresponding to a particular set of one or more light emitters, to decode the associated sequence of events recorded for a respective set of events to obtain a data value of the set of data values associated with that light emitter.

**14.** A vehicle control unit including a system as claimed in any of claims 10 to 13, wherein the light communication is used to facilitate control of the vehicle when performing an automated manoeuvre, such as facilitating an autonomous landing manoeuvre for an aircraft.

**15.** A computer program product containing instructions that when executed perform a method as claimed in any of claims 2 to 8 when dependent on claim 2.

Figure 1

Receive
light from
scene — 31

For each pixel of the event-based
camera, determine whether the
brightness of light detected at
each respective pixel has changed
by a threshold amount over the
previous image. — 32

Show events at pixel
which have received
sufficient brightness
change — 33

For pixels which have
had no sufficient
brightness change,
output no events for
those pixels — 34

Figure 2

Figure 3

41

Receive Light

42

Filter "noisy" events

43

Fragment sequence
of events

44

Decode

Figure 4

Figure 5

| | Europäisches Patentamt European Patent Office Office européen des brevets | **EUROPEAN SEARCH REPORT** | | | Application Number EP 23 20 2499 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/072801 A1 (RITTER SCOTT [US]) 9 March 2023 (2023-03-09) * paragraph [0015] * * paragraph [0032] - paragraph [0034]; figure 4 * | 1-15 | INV. H04B10/116 |
| A | WO 2023/091060 A1 (ERICSSON TELEFON AB L M [SE]) 25 May 2023 (2023-05-25) * paragraphs [0003], [0007], [0009] * | 1-15 | |
| Y | CN 116 155 379 A (UNIV CHINA MINING & TECH) 23 May 2023 (2023-05-23) * paragraphs [0055], [0056]; figure 2 * | 1-15 | |
| A | US 11 722 892 B2 (AISIN CORP [JP]) 8 August 2023 (2023-08-08) * column 6, line 28 - column 7, line 57; figure 4 * | 1-15 | |
| | | | TECHNICAL FIELDS SEARCHED (IPC) H04B |

The present search report has been drawn up for all claims

| Place of search | Date of completion of the search | Examiner |
|---|---|---|
| Munich | 8 March 2024 | Borsier, Celine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 2499

This annex lists the patent family members relating to the patent documents cited in  the above-mentioned European search report.
The members are as contained in the European Patent Office EDP file on
The European Patent Office is in no way liable for these particulars which are merely given for the purpose of information.

08-03-2024

| Patent document cited in search report | | Publication date | Patent family member(s) | | Publication date |
|---|---|---|---|---|---|
| US 2023072801 | A1 | 09-03-2023 | AU | 2021318396 A1 | 29-09-2022 |
|  |  |  | EP | 4189857 A1 | 07-06-2023 |
|  |  |  | JP | 7320690 B2 | 03-08-2023 |
|  |  |  | JP | 2023530200 A | 13-07-2023 |
|  |  |  | US | 11063667 B1 | 13-07-2021 |
|  |  |  | US | 2022038182 A1 | 03-02-2022 |
|  |  |  | US | 2023072801 A1 | 09-03-2023 |
|  |  |  | WO | 2022026051 A1 | 03-02-2022 |
| WO 2023091060 | A1 | 25-05-2023 | NONE | | |
| CN 116155379 | A | 23-05-2023 | NONE | | |
| US 11722892 | B2 | 08-08-2023 | EP | 3930218 A1 | 29-12-2021 |
|  |  |  | JP | 2022003756 A | 11-01-2022 |
|  |  |  | US | 2021400476 A1 | 23-12-2021 |

EPO FORM P0459

For more details about this annex : see Official Journal of the European Patent Office, No. 12/82